Europäisches Patentamt

European Patent Office

Office européen des brevets

(19)

(11) **EP 1 638 230 A1**

(12) **EUROPEAN PATENT APPLICATION**
published in accordance with Art. 158(3) EPC

(43) Date of publication:
**22.03.2006 Bulletin 2006/12**

(51) Int Cl.:
*H04J 11/00* (1974.07)

(21) Application number: **04770944.9**

(22) Date of filing: **26.07.2004**

(86) International application number:
**PCT/JP2004/010633**

(87) International publication number:
**WO 2005/011168 (03.02.2005 Gazette 2005/05)**

(84) Designated Contracting States:
**DE FR GB**

(30) Priority: **28.07.2003 JP 2003280553**

(71) Applicant: **MATSUSHITA ELECTRIC INDUSTRIAL CO., LTD.**
**Kadoma-shi, Osaka 571-8501 (JP)**

(72) Inventor: **LI, Jifeng**
**Chaoayang District,**
**Beijin 100101 (CN)**

(74) Representative: **Grünecker, Kinkeldey,**
**Stockmair & Schwanhäusser**
**Anwaltssozietät**
**Maximilianstrasse 58**
**D-80538 München (DE)**

(54) **PEAK ELECTRIC POWER SUPPRESSING APPARATUS AND PEAK ELECTRIC POWER SUPPRESSING METHOD**

(57)      A peak power suppressing apparatus for suppressing the peak power with simple process without deteriorating the error characteristics of multi-carrier signals. In this apparatus, a modulation section (100) modulates transmission data. A coding section (110) codes the modulated data. An S/P conversion section (120) S/P converts the coded data and outputs the obtained parallel data of a plurality of sequences to an IFFT section (130) . The IFFT section (130) performs inverse fast Fourier transform on the parallel data to generate an OFDM signal. A GI adding section (140) adds a guard interval to the OFDM signal. A power conversion section (150) converts the power of the OFDM signal using the non-linear function. AD/Aconversion section (160) D/Aconverts the OFDM signal after the power conversion. A wireless transmission section (170) amplifies the power of the analog signal, performs a predetermined wireless transmission process such as up conversion and transmits the result via an antenna (180).

FIG.1

**Description**

Technical Field

The present invention relates to a peak power suppressing apparatus and a method of suppressing peak power for suppressing the peak power of a multi-carrier signal represented by an OFDM (Orthogonal Frequency Division Multiplexing) signal.

Background Art

Recently, VSF-OFCDM (Variable Spreading Factor-Orthogonal Frequency and Code Division Multiplexing) is given attention as the strongest candidate for the scheme to be employed in for the fourth generation mobile communication. If VSF-OFCDM is employed, the maximum transmission speed over 100Mbs can be achieved using approximately 50MHz-100MHz bandwidth.

Generally, with a multi-carrier communication method such as VSF-OFCDM, transmission signals superimposed upon a plurality of carriers are added on the time axis and produce high peak power. A high power amplifier (HPA) having sufficiently large input back off (IBO) is required to perform linear amplification on such multi-carrier signals having high peak power, which decreases power efficiency.

Therefore, particularly with in multi-carrier communication methods, a multi-carrier signal needs to have its peak power suppressed and then input to an amplifier such as HPA. Methods of peak power suppression include the following:

Non-patent document 1, for example, discloses a process referred to as clipping. Clipping is a method of "clipping" (cutting) multi-carrier signals generated by over sampling in a predetermined power range and removing the out-of-band component produced by clipping through filtering. Clipping may suppress the peak power with simple process but causes interference between sub-carriers since non-linear process is performed and deteriorates the error characteristics of the multi-carrier signal.

A process referred to as partial transmit sequence (PTS) is disclosed in non-patent document 2, for example, as a method of suppressing peak power without involving deterioration of error characteristics. In PTS, carriers of multi-carrier signals are classified into a plurality of clusters, and a phase weight is added to each cluster to shift the position of the peak in each cluster. The peak power of the transmission signal obtained by adding the clusters is suppressed by shifting the peak positions in the clusters.

Many methods of suppressing the peak power of multi-carrier signals, in particular, OFDM signals, have been proposed in addition to the above clipping and partial transmit sequence methods.

Non-patent Document 1: O'Neill, R. and Lopes, L.B. (1995), "Envelope Variations and Spectral Splatter in Clipped Multicarrier Signals", IEEE conference proceedings PIMRC, pp.71-76.

Non-patent Document 2: Muller, S.H. and Huber, J.B. (1997), "OFDM with Reduced Peak to Average Power Ratio by Optimum Combination of Partial Transmit Sequences", IEE Electronics Letters, Vol.33, No.5, February, pp. 368-369.

Disclosure of Invention

Problems to be Solved by the Invention

However, conventional methods of peak power suppression presents the following problems.

That is, since clipping is merely a method of cutting the portion of a signal having a peak, non-linear distortion occurs, and the error characteristics of multi-carrier signals deteriorate.

Further, with methods such as PTS, deterioration of the error characteristics may be prevented but the calculation process for suppressing the peak power becomes complicating, and, as a result, causes processing delay and increases circuit dimension.

It is therefore an object of the present invention to provide a peak power suppressing apparatus and a method of suppressing peak power for suppressing the peak power with simple process without deteriorating the error characteristics of the multi-carrier signal.

Means for Solving the Problem

A peak power suppressing apparatus according to the present invention employs a configuration having: a generation section that generates a multi-carrier signal in which data is superimposed on a plurality of carriers; a conversion section that converts power of the generated multi-carrier signal with a non-linear function whereby an input value is mapped in a direction an absolute value becomes larger near the origin and the map of the input value gradually approaches a predetermined value as the map becomes distant from the origin; and a transmission section that transmits the multi-carrier signal after the power conversion.

A peak power suppression method according to the present invention has the steps of: generating a multi-carrier signal in which data is superimposed on a plurality of carriers; converting power of the generated multi-carrier signal with a non-linear function whereby an input value is mapped in a direction an absolute value becomes larger near the origin and the map of the input value gradually approaches a predetermined value as the map becomes distant from the origin; and transmitting the multi-carrier signal after the power conversion.

Advantageous Effect of the Invention

According to the present invention, peak power is suppressed with simple process without deteriorating error characteristics of multi-carrier signals.

Brief Description of Drawings

FIG.1 is a block diagram showing a configuration of a peak power suppressing apparatus according to an embodiment of the present invention;
FIG.2 is a block diagram showing an internal configuration of a power conversion section according to Embodiment 1 of the present invention;
FIG.3 is a view explaining a peak power suppressing operation according to Embodiment 1;
FIG. 4 is a view showing one example of a constellation of before power conversion according to Embodiment 1;
FIG. 5 is a view showing one example of a constellation of after power conversion according to Embodiment 1;
FIG.6 is a block diagram showing an internal configuration of a power conversion section according to Embodiment 2 of the present invention; and
FIG.7 is a view explaining another embodiment of the present invention.

Best Mode for Carrying Out the Invention

Embodiments of the present invention will now be described in detail with reference to the drawings. The OFDM signal will be explained by way of example as a multi-carrier signal.

(Embodiment 1)

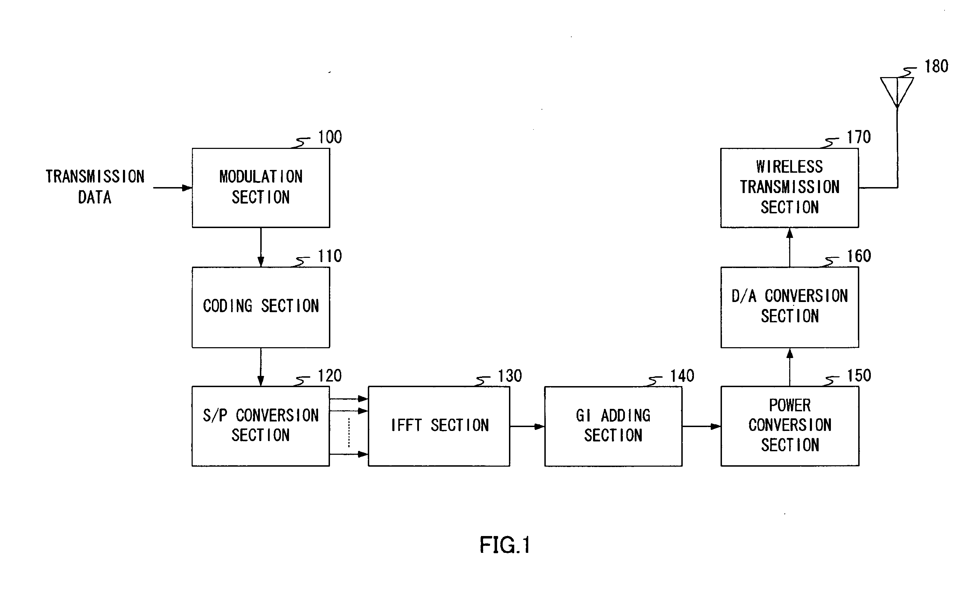

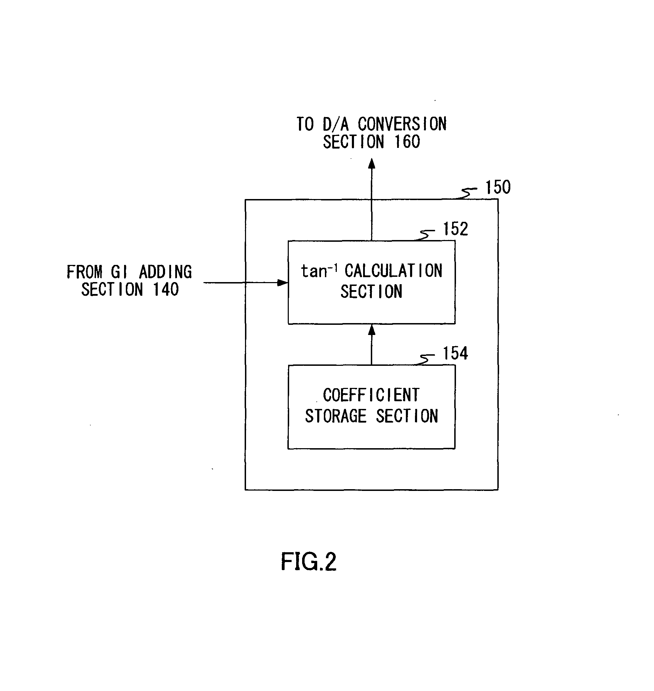

FIG.1 is a block diagram showing a configuration of a peak power suppressing apparatus according to Embodiment 1 of the present invention. The peak power suppressing apparatus shown in the figure has: Modulation section 100; coding section 110; S/P (Serial/Parallel) conversion section 120; IFFT (Inverse Fast Fourier Transform) section 130; GI (Guard Interval) adding section 140; power conversion section 150; D/A (Digital/Analog) conversion section 160; wireless transmission section 170; and antenna 180.
Modulation section 100 modulates transmission data and outputs the obtained modulated data to coding section 110.
Coding section 110 codes the modulated data and outputs the obtained coded data to S/P conversion section 120.
S/P conversion section 120 S/P converts the coded data and outputs the obtained parallel data of a plurality of sequences to IFFT section 130.
IFFT section 130 performs inverse fast Fourier transform with the parallel data and superimposes the result on a plurality of sub-carriers to generate an OFDM signal.
GI adding section 140 copies the end portion of the OFDM signal to the head and adds the guard interval.
Power conversion section 150 converts the power of the OFDM signal using a non-linear function. Specifically, power conversion section 150 includes $\tan^{-1}$ calculation section 152 and coefficient storage section 154, as shown in FIG.2, and converts the power of the OFDM signal with the following equation (1).

$$y = a \cdot \tan^{-1}(b \cdot x) \qquad \ldots \text{Equation (1)}$$

In equation (1), a and b are predetermined coefficients, x is the power of the OFDM signal before conversion or the input value, and y is the power of the OFDM signal after conversion or the map of the input value .

Power conversion section 150 has the coefficients a and b of equation (1) stored in advance in coefficient storage section 154 and calls out the coefficients a and b by $\tan^{-1}$ calculation section 152 to perform the calculation of equation (1).

D/A conversion section 160 D/A converts the OFDM signal after power conversion and outputs the obtained analog signal to wireless transmission section 170.

Wireless transmission section 170 has an amplifier (not shown), and amplifies the power of the analog signal, performs predetermined wireless transmission process such as up conversion, and transmits analog signal via antenna 180.

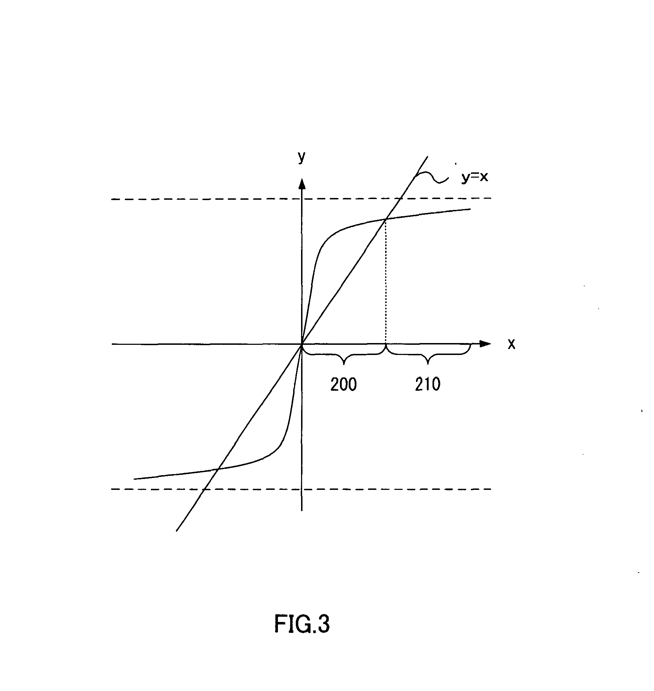

The operation of the peak power suppressing apparatus of the above-described configuration will now be explained in detail with reference to FIG.3.

First, the transmission data are modulated by modulation section 100, coded by coding section 110, S/P converted by S/P conversion section 120 whereby the parallel data of a plurality of sequences are obtained. The parallel data obtained is subjected to inversion fast Fourier transform by IFFT section 130, and the OFDM signal in which the data is superimposed on a plurality of sub-carriers is generated.

In the OFDM signal generated, a plurality of sub-carriers that are mutually frequency orthogonal are added, and so the OFDM signal has high peak power. The input back off (IBO) of the amplifier (not shown) must be made large to have the OFDM signal having high peak power amplified in the amplifier (not shown) in wireless transmission section 170, which decreases power efficiency.

The generated OFDM signal is thus input to $\tan^{-1}$ calculation section 152 of power conversion section 150 and the power is converted. Specifically, $\tan^{-1}$ calculation section 152 reads the predetermined coefficients a and b from the coefficient storage section 154 and performs computation using the tangent ($\tan^{-1}$) of equation (1) . The predetermined coefficients a and b stored in the coefficient storage section 154 are coefficients defined in advance in accordance with the property of the amplifier (not shown).

The power of the OFDM signal performed with such calculation is converted, for example, in a manner of the curve shown in FIG.3. That is, in interval 200 near the origin where x≥0, the converted power (y) is greater than the actual power (x) (in x<0, converted power is smaller than the actual power), and in interval 210 in which x is larger, the converted power (y) gradually approaches a value shown with a broken line in the drawing.

In other words, by converting the power through calculation using arctangent, the input value is mapped in a direction the absolute value becomes larger near the origin, and the map of the input value gradually approaches a predetermined value as it becomes distant from the origin. This means that the power having a small absolute value is converted so that the actual value becomes larger than actual, and the power having a large absolute value gradually approaches a predetermined value and is converted to a substantially constant value.

As the input value is mapped in a direction the absolute value becomes larger near the origin, even if the power of the OFDM signal before power conversion or the input value is small, the power thereof is prevented from being cut off as quantization error, or being removed as a noise.

Since the map of the input value gradually approaches a predetermined value, the OFDM signal having peak power that is simply cut in clipping and the like remains in a power suppressed manner without being cut, and thus information is not lost, and deterioration of error characteristics is prevented.

The power converted OFDM signal is D/A converted by D/A conversion section 160 and the obtained analog signal is output to wireless transmission section 170. The analog signal has the power amplified by an amplifier (not shown), and performed with a predetermined wireless transmission process such as up conversion and then transmitted via antenna 180.

The signal transmitted from antenna 180 is received by a receiving apparatus (not shown), in which receiving apparatus, a conversion is performed to restore the calculation using arctangent performed by power conversion section 150. In the receiving apparatus (not shown), however, good error characteristics may be obtained without performing the conversion of reversing the calculation using arctangent. When performing the restoring conversion, the power conversion may be performed simultaneously with the A/D conversion. Further, the calculation amount in the receiving apparatus (not shown) does not increase if the reverse conversion is not performed.

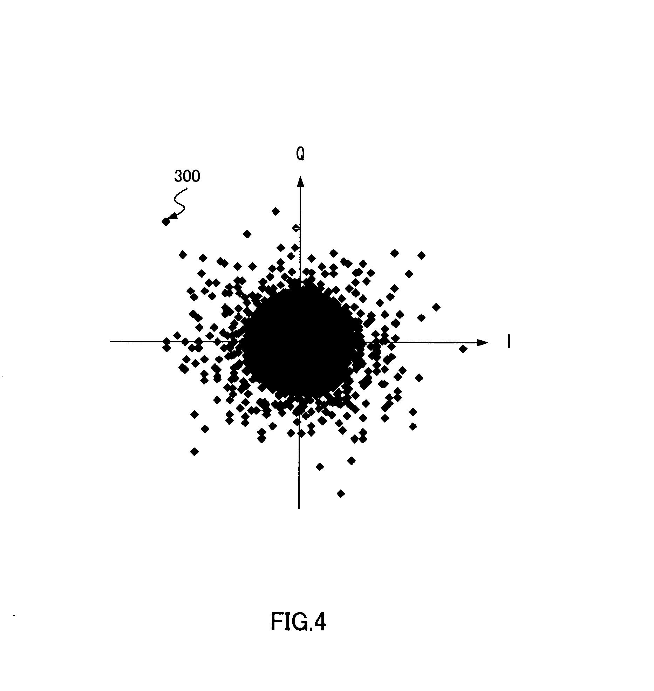

FIG.4 is a view showing an example of signal point constellation in which the OFDM signal before power conversion that is output from GI adding section 140 is plotted on an IQ plane. Signal power corresponds to the distance from the origin on the IQ plane, and thus signal point 300 shown in FIG.4, for example, is greatly distant from the origin and indicates an OFDM signal having peak power.

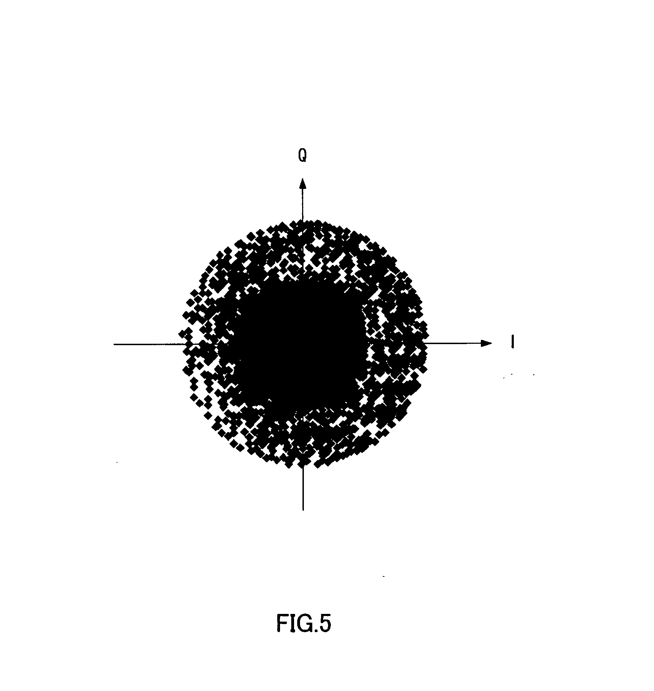

FIG.5 is a view showing an example of signal point constellation in which the OFDM signal after power conversion by power conversion section 150 is plotted on the IQ plane. As apparent from the figure, the peak power of the OFDM signal is completely suppressed.

According to the present embodiment, the power of the OFDM signal generated through inverse fast Fourier transform is conversed using arctangent or a non-linear function, and thus the peak power is suppressed a simple calculation without deteriorating the error characteristics.

(Embodiment 2)

The feature of Embodiment 2 of the present invention is that the coefficients of the calculation using arctangent are determined according to various parameters.

The overall configuration of the peak power suppressing apparatus according to the present embodiment is similar to the peak power suppressing apparatus of Embodiment 1 (FIG.1) and thus the explanation thereof is omitted. However, the internal configuration of the power conversion section 150 according to the present embodiment differs from Embodiment 1 (FIG.2).

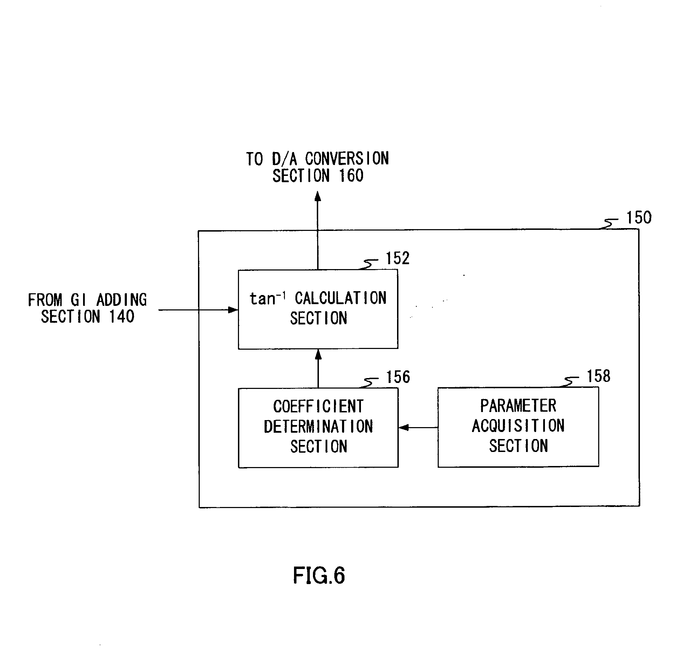

FIG.6 is a block diagram showing a configuration of power conversion section 150 according to Embodiment 2. In the figure, components similar to FIG. 2 are denoted with the same reference characters, and thus the explanation thereof is omitted. Power conversion section 150 shown in FIG.6 includes $\tan^{-1}$ calculation section 152, coefficient determination section 156, and parameter acquisition section158.

Coefficient determination section 156 determines the coefficients a and b of equation (1) according to parameters such as the characteristics of the amplifier (not shown) in the wireless transmission section 170, the number of multiplex codes, the modulating scheme in modulation section 100, the spreading factor, the coding rate in coding section 110 and so forth.

Parameter acquisition section 158 acquires various parameters mentioned above and outputs them to coefficient determination section 156.

In equation (1), (distance between the broken lines in FIG.3) the width asymptotic values increases when the coefficient a is made large, and the rise of the curve near the origin becomes steep when the coefficient b is made large. In the present embodiment, suitable coefficients are determined according to the environment of communication using the above-noted characteristics and calculation is performed.

Thus, according to the present embodiment, the coefficient of the non-linear function is determined according to the acquired parameters and the power of the OFDM signal is converted by such non-linear function, thereby allowing suitable non-linear functions to be constantly determined even if the communication environment changes.

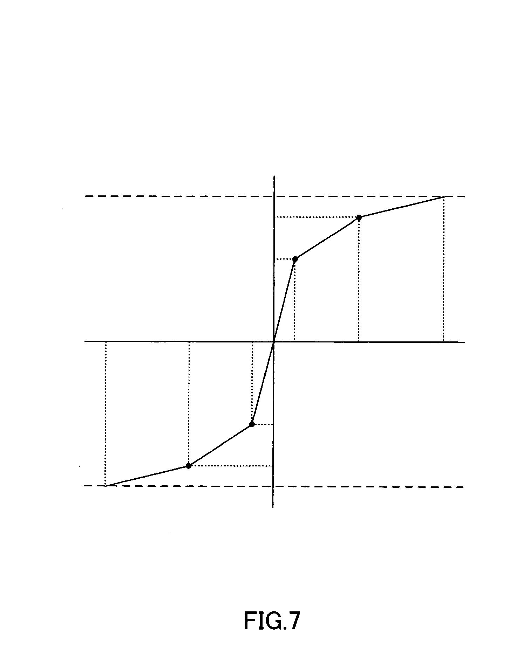

Ineach of the above-described embodiments, power conversion is performed with the non-linear function using arctangent, but the power conversion may be performed by dividing the non-linear function to a plurality of portions, and approximating each portion to a line of a linear function, as shown in FIG.7. By thus approximating a non-linear function using a linear function, the calculation is further facilitated, and the cost required for mounting the arithmetic circuit is reduced.

In each of the above-described embodiments, the power of an OFDM signal is converted by a non-linear function using an arctangent, yet, besides the above methods using arctangent, similar advantages can be still achieved by, for example, mapping the input value in a direction the absolute value increases near the origin and the or by using a non-linear function whereby the map of the input value approximates a predetermined value as it becomes distant from the origin.

Apeak power suppressing apparatus of the present invention employs a configuration having: a generation section that generates a multi-carrier signal in which data is superimposed on a plurality of carriers; a conversion section that converts power of the generated multi-carrier signal with a non-linear function whereby an input value is mapped in a direction an absolute value becomes larger near the origin and the map of the input value gradually approaches a predetermined value as the map becomes distant from the origin; and a transmission section that transmits the multi-carrier signal after the power conversion.

According to this configuration, the power of the multi-carrier signal is converted with the non-linear function whereby the input value is mapped in a direction the absolute value becomes larger near the origin and the map of the input value gradually approaches a predetermined value as it becomes distant from the origin and transmitted. Thus, the signal of small power is not cut off as quantization error and the like and the signal of peak power is not cut. Consequently, peak power is suppressed with simple process without deteriorating the error characteristics of the multi-carrier signal.

The peak power suppressing apparatus of the present invention also employs a configuration in which the conversion section converts the power of the multi-carrier signal with the non-linear function using an arctangent.

According to this configuration, the power of the multi-carrier signal is converted with the non-linear function using an arctangent, and thus a general non-linear function can be used for power conversion and an arithmetic calculating circuit and the like may be used.

The peak power suppressing apparatus of the present invention also employs a configuration in which the conversion section has a coefficient storage section that stores coefficients of the non-linear function, and an arctangent calculation section that performs arctangent calculation with the power of the multi-carrier signal using the stored coefficients.

According to such configuration, the arctangent calculation is performed with the power of the multi-carrier signal using the stored coefficients, and thus the coefficients do not need to be calculated, and the calculation amount is reduced.

The peak power suppressing apparatus of the present invention also employs a configuration in which the conversion section has a parameter acquisition section that acquires the parameter providing an indicator of the communication environment, a coefficient determination section that determines the coefficient of the non-linear function based on the acquired parameter, and an arctangent calculation section that performs arctangent calculation with the power of the multi-carrier signal using the determined coefficient.

According to this configuration, the coefficient is determined based on the parameters acting as the index of the communication environment, and the arctangent calculation is performed on the power of the multi-carrier signal using the determined coefficient, and thus power conversion can be performed with a suitable non-linear function corresponding to the communication environment, and the peak power suppressing effect is further enhanced.

The peak power suppressing apparatus of the present invention also employs a configuration in which the parameter acquisition section acquires at least one parameter from: power amplifier characteristics of the peak power suppressing apparatus; and the number of multiplexed codes, modulation level, or coding rate of the multi-carrier signal.

According to this configuration, at least one parameter is acquired from: power amplifier characteristics of the peak power suppressing apparatus; and the number of multiplexed codes, modulation level, or coding rate of the multi-carrier signal, and thus the coefficient of the non-linear function is determined from the parameter related to the peak power of the multi-carrier signal, and the peak power suppressing effect is further enhanced.

The peak power suppressing apparatus according to the present invention also employs a configuration in which the conversion section converts the power of the multi-carrier signal after approximating the non-linear function with a linear function.

According to this configuration, the power of the multi-carrier signal is converted after approximating the non-linear function with the linear function, and thus the calculation for power conversion is further facilitated, and the cost required for mounting the arithmetic circuit is reduced.

Abase station apparatus according to the present invention employs a configuration having a peak power suppressing apparatus having the above-noted configurations.

According to this configuration, effects similar to the peak power suppressing apparatus of any of the above can be achieved in the base station apparatus.

A mobile station apparatus of the present invention employs a configuration having the peak power suppressing apparatus having the above-noted configurations.

According to this configuration, effects similar to the peak power suppressing apparatus of any of the above are achieved in the mobile station apparatus.

A peak power suppression method according to the present invention has the steps of: generating a multi-carrier signal in which data is superimposed on a plurality of carriers; converting power of the generated multi-carrier signal with a non-linear function whereby an input value is mapped in a direction an absolute value becomes larger near the origin and the map of the input value gradually approaches a predetermined value as the map becomes distant from the origin; and transmitting the multi-carrier signal after the power conversion.

According to this method, the power of the multi-carrier signal is converted with the non-linear function in which the input value is mapped in a direction the absolute value becomes larger near the origin and the mapping of the input value gradually approaches a predetermined value as it becomes distant from the origin and then transmitted. Thus, the signal of small power is not cut off as quantization error and the like, and the signal of peak power is not cut. Consequently, the peak power is suppressed with simple process without deteriorating the error characteristics of the multi-carrier signal.

The present specification is based on Japanese Patent Application No.2003-280553 filed on July 28, 2003, the overall content of which is incorporated herein by reference.

Industrial Applicability

The peak power suppressing apparatus and the method of suppressing peak power according to the present invention are suitable for use in a peak power suppressing apparatus and a method of suppressing peak power for suppressing the peak power of the multi-carrier signal represented by the OFDM signal with simple process without deteriorating the error characteristics of multi-carrier signals.

FIG.1
100 MODULATION SECTION
110 CODING SECTION

120 S/P CONVERSION SECTION
130 IFFT SECTION
140 GI ADDING SECTION
150 POWER CONVERSION SECTION
160 D/A CONVERSION SECTION
170 WIRELESS TRANSMISSION SECTION
TRANSMISSION DATA
FIG.2
152 tan$^{-1}$ CALCULATION SECTION
154 COEFFICIENT STORAGE SECTION
FROM GI ADDING SECTION 140
TO D/A CONVERSION SECTION 160
FIG.6
152 TAN$^{-1}$ CALCULATION SECTION
156 COEFFICIENT DETERMINATION SECTION
158 PARAMETER ACQUISITION SECTION
FROM GI ADDING SECTION 140
TO D/A CONVERSION SECTION 160

**Claims**

1. A peak power suppressing apparatus comprising:

   a generation section that generates a multi-carrier signal in which data is superimposed on a plurality of carriers;
   a conversion section that converts power of the generated multi-carriersignalwithanon-linearfunction whereby an input value is mapped in a direction an absolute value becomes larger near the origin and the map of the input value gradually approaches a predetermined value as said map becomes distant from the origin; and
   a transmission section that transmits the multi-carrier signal after the power conversion.

2. The peak power suppressing apparatus according to claim 1, wherein the conversion section converts the power of the multi-carrier signal with the non-linear function using an arctangent.

3. The peak power suppressing apparatus according to claim 2, wherein the conversion section converts power x of the multi-carrier signal to power y by equation:

$$y = a \cdot tan^{-1}(b \cdot x)$$

   where a and b are predetermined coefficients.

4. The peak power suppressing apparatus according to claim 2, wherein the conversion section comprises:

   a coefficient storage section that stores a coefficient of the non-linear function; and
   an arctangent calculation section that performs an arctangent calculation with the power of the multi-carrier signal using the stored coefficient.

5. The peak power suppressing apparatus according to claim 2, wherein the conversion section comprises:

   a parameter acquisition section that acquires a parameter providing an indicator of communication environment;
   a coefficient determination section that determines the coefficient of the non-linear function based on the acquired parameter; and an arctangent calculation section that performs an arctangent calculation with the power of the multi-carrier signal using the determined coefficient.

6. The peak power suppressing apparatus according to claim 5, wherein the parameter acquisition section acquires at least one parameter from: power amplifier characteristics of the peak power suppressing apparatus; and the number of multiplexed codes, modulation level, or coding rate of the multi-carrier signal.

7. The peak power suppressing apparatus according to claim 1, wherein the conversion section converts the power of the multi-carrier signal after approximating the non-linear function with a linear function.

8. A base station apparatus comprising the peak power suppressing apparatus of claim 1.

9. Amobile station apparatus comprising the peak power suppressing apparatus of claim 1.

10. Apeak power suppression method comprising the steps of:

generating a multi-carrier signal in which data is superimposed on a plurality of carriers;
converting power of the generated multi-carrier signal with a non-linear function whereby an input value is mapped in a direction an absolute value becomes larger near the origin and the map of the input value gradually approaches a predetermined value as said map becomes distant from the origin; and
transmitting the multi-carrier signal after the power conversion.

FIG.1

TO D/A CONVERSION
SECTION 160

↑

⌇‑ 150

⌇‑ 152

FROM GI ADDING
SECTION 140 →

tan⁻¹ CALCULATION
SECTION

↑

⌇‑ 154

COEFFICIENT
STORAGE SECTION

FIG.2

FIG.3

FIG.4

FIG.5

TO D/A CONVERSION
SECTION 160

$\sim$ 150

$\sim$ 152

FROM GI ADDING
SECTION 140

tan⁻¹ CALCULATION
SECTION

$\sim$ 156

$\sim$ 158

COEFFICIENT
DETERMINATION
SECTION

PARAMETER
ACQUISITION
SECTION

FIG.6

FIG.7

## INTERNATIONAL SEARCH REPORT

| | International application No. |
|---|---|
| | PCT/JP2004/010633 |

**A. CLASSIFICATION OF SUBJECT MATTER**
Int.Cl⁷ H04J11/00

According to International Patent Classification (IPC) or to both national classification and IPC

**B. FIELDS SEARCHED**

Minimum documentation searched (classification system followed by classification symbols)
Int.Cl⁷ H04J11/00

Documentation searched other than minimum documentation to the extent that such documents are included in the fields searched
| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | Xianbin Wang, T.T.Tjhung, C.S.Ng, "Reduction of Peak-to-Avarage Ratio of OFDM System Using Companding Technique", IEEE Transactions on Broadcasting, Vol.45, No.3, September 1999, pages 303 to 307 | 1-4,8-10<br>7<br>5,6 |
| Y<br>A | Tadashi SAITO, Yuji ICHINOSE, Fushio ARITA, "OFDM Shingo ni Taisuru Peak Tai Heikin Denryokuhi no Yokusei Hoshiki no Kaihatsu", 2002 nen The Institute of Electronics, Information and Communication Engineers Tsushin Society Taikai, B-8-34, page 274 | 7<br>1-6,8-10 |

[X] Further documents are listed in the continuation of Box C.  [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 October, 2004 (18.10.04) | 02 November, 2004 (02.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

<div align="center">

**INTERNATIONAL SEARCH REPORT**

</div>

| | International application No. |
| --- | --- |
| | PCT/JP2004/010633 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | Toshimitsu TAKE, Tomoaki OTSUKI, "Kubun Senkei Henkan o Mochiita OFDM Shingo no PAPR Teigen ni Kansuru Ichikento", 2003 nen The Institute of Electronics, Information and Communication Engineers Sogo Taikai, B-5-68, page 527 | 7<br>1-6,8-10 |
| P,A | Toshimitsu TAKE, Tomoaki OTSUKI, "Kubun Senkei Henkan o Mochiita OFDM Shingo no Taiikigai Fukusha Yokuatsu ni Kansuru Ichikento", 2004 nen The Institute of Electronics, Information and Communication Engineers Sogo Taikai, B-5-75, page 562 | 1-10 |

Form PCT/ISA/210 (continuation of second sheet) (January 2004)